# EUROPÄISCHE PATENTANMELDUNG

(11) **EP 2 290 326 A1**
(43) Veröffentlichungstag der Anmeldung: **02.03.2011**
(21) Anmeldenummer: 10173403.6
(22) Anmeldetag: 19.08.2010
(51) Int. Cl.: G01C 21/36, G10L 15/22

(54) **Verfahren zum Betrieb eines Navigationssystems**

(30) Priorität: 26.08.2009 DE 102009038610; 03.08.2010 DE 102010033189
(71) Anmelder: Navigon AG, 20251 Hamburg (DE)
(72) Erfinder: Fritsche, Jan-Georg, 97078, Würzburg (DE); Steglich, Martin, 97080, Würzburg (DE)
(74) Vertreter: von den Steinen, Axel

(57) **Zusammenfassung**

Die Erfindung betrifft ein Verfahren zum Betrieb eines Navigationssystems mit einer Routenberechnungseinheit, mit einer Sonderzieldatenbank, in der Sonderziele zumindest mit Daten zur Beschreibung ihrer geographischen Lage und mit zumindest einer Sonderzielkategorie zur Klassifizierung des Sonderziels gespeichert sind, mit einer Sonderzielkategoriedatenbank, in der Sonderzielkategorien in einem Sonderzielkategoriebaum abgespeichert sind, wobei mittels der Verzweigungen des Sonderzielkategoriebaums eine Differenzierung der Sonderzielkategorien (15, 17, 18, 19, 25, 26, 27, 28, 29) erfolgt, und mit einer Aufnahmeeinrichtung, an der eine akustische Eingabe, die aus zumindest einem Eingabebestandteil besteht, aufgenommen werden kann, wobei der mindestens eine Eingabebestandteil mit einem Spracherkennungsmodul analysiert wird, und wobei in Abhängigkeit vom Ergebnis der Spracherkennungsanalyse einem Eingabebestandteil zumindest eine Sonderzielkategorie (15, 17, 18, 19, 25, 26, 27, 28, 29) aus der Sonderzielkategoriedatenbank zugeordnet werden kann, wobei bei einer Sonderzieleingabe aus zwei oder mehr Eingabebestandteilen geprüft wird, ob die zugeordneten Sonderzielkategorien (15, 17, 18, 19, 25, 26, 27, 28, 29) von zumindest zwei Eingabebestandteilen über den Sonderzielkategoriebaum der Sonderzielkategoriedatenbank durch einen differenzierenden Zusammenhang der Sonderzielkategorien (15, 17, 18, 19, 25, 26, 27, 28, 29) miteinander verknüpft sind, wobei aus zumindest einer einem Eingabebestandteil zugeordneten Sonderzielkategorie (15, 17, 18, 19, 25, 26, 27, 28, 29) zumindest ein Sonderziel, welches durch zumindest die entsprechende Sonderzielkategorie klassifiziert ist, zur Weiterverarbeitung ausgewählt wird.

## Beschreibung

Die Erfindung betrifft ein Verfahren zum Betrieb eines Navigationssystems nach dem Oberbegriff des Anspruchs 1.

Gattungsgemäße Navigationssysteme, insbesondere Navigationsgeräte, werden beispielsweise in Kraftfahrzeugen eingesetzt, um den Fahrer entlang einer Route von einem Startpunkt zu einem Zielpunkt zu führen. Über Eingabeeinrichtungen kann der Benutzer dabei Bedienerbefehle eingeben und Ortseingaben vornehmen und dadurch in Kommunikation mit dem Gerät treten. Bekannte Navigationssysteme weisen dabei neben einer manuellen Eingabeeinrichtung, an der Bedienerbefehle alphanumerisch eingegeben werden, auch akustische Eingabeeinrichtungen auf. Die akustischen Eingabeeinrichtungen umfassen dabei meist eine Aufnahmeeinrichtung, in der eine akustische Eingabe aufgenommen werden kann, sowie ein Spracherkennungsmodul, welches die akustische Eingabe analysiert. Durch Empfang von Positionssignalen, die insbesondere von Positionierungssatelliten abgegeben werden, beispielsweise GPS-Satelliten, kann eine Signalempfangseinheit des Navigationssystems in Zusammenarbeit mit einer Positionsermittlungseinheit die Position jeweils aktuell bestimmen. Ausgehend von den Daten einer Wegenetzdatenbank kann außerdem mittels einer Routenberechnungseinheit eine geplante Route ermittelt und im Routenführungsprozess zugrunde gelegt werden. Als Ergänzung der Wegenetzdatenbank oder zusätzlich zu dieser enthalten gattungsgemäße Navigationssysteme eine so genannte Sonderzieldatenbank bzw. POI-Datenbank zur Beschreibung von hervorzuhebenden Orten (Points of Interest/POI). Den einzelnen Sonderzielen der Sonderzieldatenbank sind dabei Sonderzielkategorien zugewiesen, die das Identifizieren möglicher Sonderziele erleichtern sollen. Tankstellen, Restaurants und Sehenswürdigkeiten sind Beispiele für diese Sonderzielkategorien.

Gattungsgemäße Verfahren zum Betrieb eines Navigationssystems sehen die akustische Eingabe von Sonderzielen vor. Dabei ist beispielsweise vorgesehen, dass in einer Sonderzieldatenbank Sonderziele gespeichert sind, wobei mit den Sonderzielen jeweils eine Identifikationsnummer und beschreibende bzw. benennende Informationen gespeichert werden. Weiter ist vorgesehen, dass ein aus den die Sonderziele beschreibenden bzw. benennenden Informationen bestehender Wortschatz in einer Datenbank gespeichert ist. Nach einer akustischen Eingabe, die aus mehreren Wörtern bzw. einem Satz besteht, wird die Eingabe in einzelne Wörter unterteilt. Diese einzelnen Wörter werden anschließend mit dem Wortschatz der Datenbank verglichen. Beim Feststellen einer vermeintlichen Übereinstimmung zwischen einem Eingabewort und einem Wort aus dem Wortschatz werden alle Sonderzielidentifikationsnummern aus der Sonderzieldatenbank ausgelesen, die das vermeintlich erkannte Wort enthalten. Danach werden die vermeintlich erkannten Wörter zu unterschiedlichen Phrasen bzw. Wortkombinationen zusammengefasst und diejenigen Sonderzielidentifikationsnummern ausgelesen, die die Wortkombinationen vermeintlich erkannter Wörter enthalten. Anhand der Häufigkeit der Sonderzielidentifikationsnummern der Sonderziele, in der die einzelnen vermeintlich erkannten Wörter und die Wortkombinationen der vermeintlich erkannten Wörter vertreten sind, wird dann ein Sonderziel aus der Sonderzieldatenbank ausgewählt. Derartige Verfahren unterliegen der grundlegenden Problematik, dass eine zufriedenstellende Funktionalität nur dann gegeben ist, wenn eine Identifikation der eingegebenen Wörter zuverlässig und fehlerfrei erfolgt. Mit anderen Worten können derartige Verfahren bei einer fehlerhaften oder zumindest nicht eindeutigen Identifizierung der Wörter eine zuverlässige Identifikation des vom Benutzer gewünschten Sonderziels nicht gewährleisten.

Ebenfalls aus dem Stand der Technik bekannt sind Sonderzieldatenbanken, die Sonderziele in hierarchische bzw. differenzierende Strukturen unterteilen bzw. einordnen. Auch diese hierarchische bzw. differenzierende Strukturierung der Sonderzieldatenbank wird in gattungsgemäßen Verfahren zum Betrieb eines Navigationssystems herangezogen. Die bekannten Verfahren sehen dabei vor, dass die Eingabe des Benutzers in der Reihenfolge der Eingabebestandteile der Differenzierungsstruktur der Sonderzieldatenbank folgt. Es ist also vorgesehen, dass der Benutzer als ersten Eingabebestandteil einen Begriff aus der oberen Differenzierungsebene der Sonderzieldatenbank eingibt, wobei das Spracherkennungsmodul den Eingabebestandteil mit dem zur Strukturierung der Sonderziele verwendeten Wortschatz der obersten Differenzierungsstufe vergleicht und mögliche Übereinstimmungen auswählt. Die bekannten Verfahren schlagen vor, in gleicher Weise für die darauf folgenden Differenzierungsstufen zu verfahren und aus dem jeweils möglichen Übereinstimmungen zwischen Eingabebestandteil und Wortschatz der Hierarchieebene einen Suchbaum zu erstellen, bei dem die einzelnen Verzweigungswege bzw. Differenzierungswege auf Existenz überprüft und dadurch ein Sonderziel ausgewählt wird. Derartige Verfahren haben den gravierenden Nachteil, dass dem Benutzer die differenzierende Struktur der Sonderzieldatenbank entweder bis ins Detail bekannt sein muss oder sie ihm während der Eingabe erkenntlich gemacht werden muss. Mit anderen Worten gesagt bedeutet dies, dass ein derartiges Verfahren zum Abbruch führt, wenn der Benutzer bei der Reihenfolge der Eingabebestandteile eine Differenzierungsebene der Sonderzieldatenbank überspringt. Das Verfahren bleibt ebenfalls ergebnislos, wenn keine Übereinstimmung mit der obersten Differenzierungsebene identifiziert wird. Eine intuitive, akustische Sonderzieleingabe ist daher nicht gegeben.

Ausgehend von diesem Stand der Technik ist es deshalb Aufgabe der vorliegenden Erfindung, ein neues Verfahren zum Betrieb eines Navigationssystems vorzuschlagen, das einerseits die Erkennungsrate von akustischen Sonderzielsucheingaben erheblich verbessert und andererseits eine intuitive, akustische Eingabe ermöglicht.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf der Grundüberlegung, dass das Navigationssystem mit einer Sonderzielkategoriedatenbank ausgestattet ist, in der Sonderzielkategorien in einem Sonderzielkategoriebaum abgespeichert sind, wobei mittels der Verzweigungen des Sonderzielkategoriebaums eine Differenzierung der Sonderzielkategorien erfolgt, und dass bei einer akustischen Eingabe, bestehend aus zwei oder mehr Eingabebestandteilen, überprüft wird, ob die Sonderzielkategorien, die den Eingabebestandteilen aufgrund des Ergebnisses einer Spracherkennungsanalyse zugewiesen wurden, über den Sonderzielkategoriebaum der Sonderzielkategoriedatenbank durch einen differenzierenden Zusammenhang miteinander verknüpft sind.

Als Baum wird in diesem Zusammenhang eine abstrakte Datenstruktur verstanden, deren Datensätze durch bekannte, datentechnisch vorteilhafte Elemente miteinander verknüpft bzw. in Zusammenhang gebracht werden können, wobei vorgesehen ist, dass maximal eine Verknüpfung auf jeweils einen Datensatz verweist und dass mindestens eine Verknüpfung von einem Datensatz auf mindestens einen anderen Datensatz verweisen kann. Dadurch kann auch bei beliebiger faktischer Speicherung des Sonderzielkategoriebaums die differenzierende Strukturierung erhalten und gleichzeitig eine möglichst vorteilhafte und Ressourcen sparende Speicherung mit schneller Zugriffsmöglichkeit bzw. schneller Auslesbarkeit erreicht werden.

Diese Überprüfung findet statt nachdem eine akustische Eingabe, bestehend aus zwei oder mehr Eingabebestandteilen, an einer akustischen Aufnahmeeinrichtung aufgenommen wurde und die Eingabebestandteile der Eingabe mittels eines Spracherkennungsmoduls analysiert wurden. Die Grundlage der Überprüfung eines möglichen differenzierenden Zusammenhangs sind dabei die Sonderzielkategorien, die den Eingabebestandteilen aufgrund des Ergebnisses einer Spracherkennungsanalyse zugewiesen wurden.

Eine derartige Zuordnung bzw. Zuweisung eines Eingabebestandteils zu einer Sonderzielkategorie erfolgt, wenn auf grundsätzlich beliebige Art und Weise ein bestimmtes Maß an Übereinstimmung zwischen dem Eingabebestandteil bzw. dem Ergebnis der Spracherkennungsanalyse des Eingabebestandteils und der Sonderzielkategorie festgestellt wird. Bei der Auswahl von Sonderzielen zur Weiterverarbeitung werden grundsätzlich die Sonderzielkategorien berücksichtigt, denen ein Eingabebestandteil in der oben genannten Form zugewiesen wurde.

Damit werden gleich zwei bedeutende Weiterentwicklungen bei der akustischen Sucheingabe bzw. Suchanfrage von Sonderzielen verwirklicht. Einerseits ist die Überprüfung eines differenzierenden Zusammenhangs von Eingabebestandteilen zugeordneten Sonderzielkategorien eine deutliche Korrektur- bzw. Auswahlhilfe für die Spracherkennung. Bei einer nicht eindeutigen oder mehrdeutigen Interpretation eines Eingabebestandteils kann mit einer äußerst hohen Wahrscheinlichkeit davon ausgegangen werden, dass mit dem Eingabebestandteil die Sonderzielkategorie eingegeben werden sollte, die mit einer zweiten, möglicherweise ebenfalls uneindeutig identifizierten Sonderzielkategorie über einen differenzierenden Zusammenhang verbunden ist. Dadurch steigert das erfindungsgemäße Verfahren die Erkennungssicherheit von akustischen Eingaben in erheblichem Maße.

Andererseits wird durch das erfindungsgemäße Verfahren ein hohes Maß an Flexibilität bei der akustischen Sucheingabe von Sonderzielen erreicht. Denn es wird dem Benutzer ermöglicht, jegliche Art von Sonderzielkategorien zur Beschreibung eines gewünschten Sonderziels als Eingabebestandteil zu verwenden, die der Benutzer intuitiv als für das Sonderziel beschreibend bzw. differenzierend ansieht. Insbesondere benötigt der Benutzer keinerlei Kenntnis über den Aufbau bzw. die Struktur des Sonderzielkategoriebaums.

Um die Suche nach einem Sonderziel möglichst genau vornehmen zu können ist es wünschenswert, dass die Sonderziele, die zur Weiterverarbeitung ausgewählt werden, einer Sonderzielkategorie mit möglichst hohem Differenzierungsgrad entspringen. Daher besteht eine besonders vorteilhafte Ausführungsform des erfindungsgemäßen Verfahrens darin, bei unterschiedlichen Eingabebestandteilen zugeordneten Sonderzielkategorien, die durch einen differenzierenden Zusammenhang verknüpft sind, zumindest ein Sonderziel aus der Sonderzielkategorie zur Weiterverarbeitung auszuwählen, die den höchsten Grad der Differenzierung aufweist. Damit wird durch das erfindungsgemäße Verfahren nicht nur die korrekte Identifizierung der Eingabe verbessert, sondern auch Sonderziele aus einer Sonderzielkategorie zur Weiterverarbeitung ausgewählt, die der Eingabe des Benutzers am nächsten kommt.

Wird bei der Überprüfung eines differenzierenden Zusammenhangs zwischen unterschiedlichen Eingabebestandteilen zugeordneten Sonderzielkategorien kein differenzierender Zusammenhang festgestellt, so kann dies verschiedene Gründe haben. Zunächst ist es möglich, dass der Benutzer bei seiner Eingabe willentlich Sonderzielkategorien eingegeben hat, die nicht in einem differenzierenden Zusammenhang stehen, sondern vielmehr alternative Sonderziele bzw. Sonderzielkategorien darstellen, die für den Benutzer gleichermaßen von Interesse sind. Außerdem kann auch ein mangelhaftes Ergebnis der Spracherkennungsanalyse und die daraufhin erfolgte Zuordnung der Eingabebestandteile zu Sonderzielkategorien der Grund dafür sein, dass ein differenzierender Zusammenhang der Sonderzielkategorien nicht feststellbar ist. In den beiden vorgenannten sowie weiteren Fällen ist es daher überaus vorteilhaft, wenn bei unterschiedlichen Eingabebestandteilen zugeordneten Sonderzielkategorien, die nicht durch einen differenzierenden Zusammenhang verknüpft sind, zumindest ein Sonderziel aus jeder, einem Eingabebestandteil zugeordneten Sonderzielkategorie, zur Weiterverarbeitung ausgewählt wird. Für den Fall von willentlich nicht miteinander in Beziehung stehenden Eingabebestandteilen werden somit Sonderziele aus allen für den Benutzer interessanten Sonderzielkategorien zur Weiterverarbeitung ausgewählt. Auch bei einer mangelhaften Spracherkennung von Eingabebestandteilen, die grundsätzlich einen differenzierenden Zusammenhang aufweisen, ist dadurch die Möglichkeit gegeben, dass Sonderziele einer Sonderzielkategorie, die einem Eingabebestandteil korrekt zugewiesen wurde, zur Weiterverarbeitung ausgewählt werden.

Spracherkennung bzw. die Übersetzung von akustischen Inhalten in maschinenverarbeitbare Strukturen basiert häufig auf Sprachäquivalenten, insbesondere Phonemen. Deshalb kann die Zuordnung eines Ergebnisses einer Spracherkennungsanalyse zu einer Sonderzielkategorie bei einem Verfahren zum Betrieb eines Navigationssystems besonders ressourcenschonend erfolgen, wenn die Zuordnung anhand von Sprachäquivalenten erfolgt, wobei für die Sonderzielkategorien Sprachäquivalente, insbesondere Phoneme, in der Sonderzielkategoriedatenbank gespeichert sind. Damit wird ein leichtes Abgleichen der Ergebnisse von Spracherkennungsanalysen mit den Sonderzielkategorien erreicht.

Um die intuitive, akustisch eingegebene Suche nach Sonderzielen weiter zu verbessern ist es besonders wünschenswert, dass bei der Zuordnung eines Ergebnisses einer Spracherkennungsanalyse zu einer Sonderzielkategorie Synonyme zur jeweiligen Sonderzielkategorie berücksichtigt werden, wobei die Synonyme der Sonderzielkategorie in der Sonderzielkategoriedatenbank gespeichert sind. Dabei ist hervorzuheben, dass es sich bei den Synonymen der Sonderzielkategorie nicht um eine zusätzliche Differenzierung handelt. Die Verwendung der Synonyme hat zur Folge, dass die Kategorisierung der Sonderziele nicht an eine mehr oder weniger willkürliche Definition der Sonderzielkategorien gebunden ist, sondern an die unterschiedlichsten Assoziationen eines Benutzers mit einem bestimmten Sonderziel und an die sprachlichen Vorlieben eines Benutzers angepasst ist.

In einer weiteren vorteilhaften Ausprägung des erfindungsgemäßen Verfahrens, die ebenfalls zur besseren Identifizierung von Eingabebestandteilen dient, werden bei der Zuordnung eines Ergebnisses einer Spracherkennungsanalyse zu einer Sonderzielkategorie Sprachäquivalente berücksichtigt, die eine unterschiedliche Aussprache einer Sonderzielkategorie darstellen und für eine Sonderzielkategorie in der Sonderzielkategoriedatenbank gespeichert sind. Damit wird bei der Spracherkennung dem Phänomen Rechnung getragen, dass selbst bei Personen mit der gleichen Amtssprache als Muttersprache oft erhebliche Unterschiede bei der Aussprache von Buchstaben, Silben, Semantikeinheiten oder ganzen Wörtern bestehen.

Für das erfindungsgemäße Verfahren ist es weiter vorteilhaft, wenn für die Sonderzielkategorien Sprachäquivalente in unterschiedlichen Sprachen in der Sonderzielkategoriedatenbank gespeichert sind, die bei der Zuordnung eines Ergebnisses einer Spracherkennungsanalyse zu einer Sonderzielkategorie berücksichtigt werden. Dies hat den Vorteil, dass bei der Umstellung einer Interaktionssprache eines Navigationssystems, welches mit dem erfindungsgemäßen Verfahren betrieben wird, eine akustische Sonderzielkategorieeingabe in der jeweils aktivierten Interaktionssprache möglicht ist.

Das Ziel des erfindungsgemäßen Verfahrens ist eine möglichst intuitive, akustisch eingegebene Suche nach Sonderzielen zu ermöglichen, wobei dem Benutzer eine erfolgreiche Eingabe auch ohne jegliches Wissen über die Struktur des Sonderzielkategoriebaums ermöglicht werden soll. Es ist deshalb besonders vorteilhaft, wenn die Zuordnung von Sonderzielkategorien zu Eingabebestandteilen als Ergebnis der Spracherkennungsanalyse unabhängig von der Eingabereihenfolge der Eingabebestandteile erfolgt. Für den Benutzer ergibt sich also bezüglich der den Eingabebestandteilen zugeordneten Sonderzielkategorien kein Unterschied, egal ob er die Eingabe "Eingabebestandteile A, Eingabebestandteile B" oder umgekehrt die Eingabe "Eingabebestandteile B, Eingabebestandteile A" vornimmt. In einem konkreten Beispiel würde die Eingabe "Italienisch(es) Restaurant" zur gleichen Zuordnung von Sonderzielkategorien führen wie die Eingabe "Restaurant, Italienisch".

Weiter ist es vorteilhaft, wenn im erfindungsgemäßen Verfahren die Zuordnung von Sonderzielkategorien zu Eingabebestandteilen als Ergebnis der Spracherkennungsanalyse anhand einer Wahrscheinlichkeitsanalyse durchgeführt wird. Dies ermöglicht eine Wertung bezüglich der zuzuordnenden Sonderzielkategorien. Außerdem wird durch die Verwendung einer Wahrscheinlichkeitsanalyse die Möglichkeit gegeben Wahrscheinlichkeitsgrenzwerte für die Zuordnung von Sonderzielkategorien zu Eingabebestandteilen im erfindungsgemäßen Verfahren zu verwenden. Schließlich ist die Zuordnung anhand einer Wahrscheinlichkeitsanalyse auch deshalb vorteilhaft, weil diese Ressourcen schonend bezüglich der Rechenleistung eines Navigationssystems durchgeführt werden kann.

Sollte die akustische Eingabe anhand des erfindungsgemäßen Verfahrens nicht erfolgreich oder nur teilweise erfolgreich verlaufen, so ist es besonders vorteilhaft, wenn der Benutzer darüber in Kenntnis gesetzt wird, aus welchen Gründen die Eingabe nicht erfolgen konnte. Einer der Gründe dafür liegt darin, dass bei der Zuordnung eines Ergebnisses einer Spracherkennungsanalyse zu einer Sonderzielkategorie keine ausreichende Übereinstimmung festgestellt werden kann. Das erfindungsgemäße Verfahren sieht vor, dass keine Zuordnung eines Ergebnisses einer Spracherkennungsanalyse zu einer Sonderzielkategorie erfolgt, wenn das Ergebnis der Wahrscheinlichkeitsanalyse einen gewissen Wert unterschreitet, wobei der Benutzer insbesondere durch eine Ausgabe darauf aufmerksam gemacht wird, dass keine ausreichende Übereinstimmung der Eingabe bzw. des Eingabebestandteils mit den Sonderzielkategorien ermittelt werden konnte.

Eine weitere, vorteilhafte Ausführungsform des erfindungsgemäßen Verfahrens sieht vor, dass zur Differenzierung von Sonderzielkategorien Marken- und/oder Firmennamen in der Sonderzielkategoriedatenbank gespeichert sind und bei der Zuordnung eines Ergebnisses einer Spracherkennungsanalyse zu einer Sonderzielkategorie berücksichtigt werden. Damit entsprechen die geläufigen Marken- und/oder Firmennamen einer Sonderzielkategorie selbst eigenständiger Sonderzielkategorien. Die Vorteile der Differenzierung einer Sonderzielkategorie anhand von Marken- und Firmennamen liegt darin, dass im üblichen Sprachgebrauch das gewünschte Sonderziel oftmals durch Verknüpfung des Firmen- bzw. Markennamens mit der entsprechenden Sonderzielkategorie benannt wird. Damit trägt die Verwendung von Firmen- bzw. Markennamen zur intuitiven Suche nach Sonderzielen bei. Außerdem vertraut eine Vielzahl von Benutzern bei der Inanspruchnahme von Waren oder Dienstleistungen auf die erfahrungsgemäße Qualität von bestimmten Firmen bzw. den damit verbundenen Marken. Auch für diese Benutzer kann mittels des erfindungsgemäßen Verfahrens eine deutlich schnellere und einfachere Suche der bevorzugten Sonderziele erfolgen.

Die Art und Weise, in der die Auswahl der Sonderziele einer einem Eingabebestandteil zugeordneten Sonderzielkategorie zur Weiterverarbeitung erfolgt, ist grundsätzlich beliebig. Besonders vorteilhaft ist es aber, wenn überprüft wird, ob sich in einem Umkreis bestimmter Größe um die aktuelle Position des Navigationssystems Sonderziele einer einem Eingabebestandteil zugeordneten Sonderzielkategorie befinden. Die Sonderziele einer einem Eingabebestandteil zugeordneten Sonderzielkategorie, für welche eine derartige Überprüfung ein positives Ergebnis liefert, können dann als Auswahl ausgefiltert werden. Dadurch kann der Benutzer beispielsweise anhand der Weiterverarbeitung der ausgewählten Sonderziele spontan von der derzeit verfolgten Route abweichen, um ein im Umkreis zur aktuellen Position des Navigationssystems befindliches Sonderziel anzufahren.

Alternativ dazu kann jedoch auch eine weitaus voraus schauendere Suche nach Sonderzielen erwünscht sein. In diesem Fall ist es besonders vorteilhaft, wenn die Auswahl der Sonderziele einer einem Eingabebestandteil zugeordneten Sonderzielkategorie zur Weiterverarbeitung darauf beruht, dass überprüft wird, ob sich ein Sonderziel einer einem Eingabebestandteil zugeordneten Sonderzielkategorie in einem definierten geographischen Gebiet bestimmter Größe, insbesondere in einer Stadt oder in einer Region, befindet. Die Auswahl der Sonderziele einer einem Eingabebestandteil zugeordneten Sonderzielkategorie kann auch hier aus den Sonderzielen gebildet werden, für die die Überprüfung ein positives Ergebnis liefert. Dabei ist es grundsätzlich beliebig, in welcher Form das zu überprüfende geographische Gebiet definiert wird. Vorteilhaft sind aber Definitionen in Form einer manuellen oder akustischen Eingabe, insbesondere aber einer Eingabe als Eingabebestandteil des erfindungsgemäßen Verfahrens.

Die Struktur der Sonderzielkategoriedatenbank ist ebenfalls grundsätzlich beliebig. Es kann jedoch vorteilhaft sein, wenn die Daten, die die differenzierenden Zusammenhänge des Sonderzielkategoriebaums beschreiben, in der Sonderzielkategoriedatenbank gespeichert sind. Alternativ dazu kann es auch vorteilhaft sein, wenn die Daten, die die differenzierenden Zusammenhänge des Sonderzielkategoriebaums beschreiben, extern von der Sonderzielkategoriedatenbank in einer Datenstruktur gespeichert sind. Je nach Art und Weise, wie die Auswertung der Daten der Sonderzielkategoriedatenbank erfolgt, können die alternativen Arten der Speicherung der Daten, die die differenzierenden Zusammenhänge wiedergeben, für die Leistungsfähigkeit bzw. die Entlastung der Rechenressourcen des Navigationssystems vorteilhaft sein.

Im Folgenden wird die Erfindung anhand von schematischen Zeichnungen, welche lediglich Ausführungsbeispiele zeigen, näher erläutert.

Es zeigen:
- Fig. 1: schematisierte Darstellung einer Anzeigeeinrichtung eines Navigationssystems vor der akustischen Sucheingabe eines Sonderziels sowie die dazugehörigen Ausgaben des Navigati- onssystems;
- Fig. 2: schematisierte Darstellung einer Anzeigeeinrichtung eines Navigationssystems während der akustischen Sucheingabe ei- nes Sonderziels sowie die entsprechenden akustischen Ausga- ben des Navigationssystems;
- Fig. 3: schematisierte Darstellung einer Anzeigeeinrichtung eines Navigationssystems nach der Durchführung des erfindungsge- mäßen Verfahrens sowie die entsprechenden akustischen Aus- gaben des Navigationssystems;
- Fig. 4: schematisierte Darstellung eines Ausschnitts eines Sonderziel- kategoriebaums einer Sonderzielkategoriedatenbank.

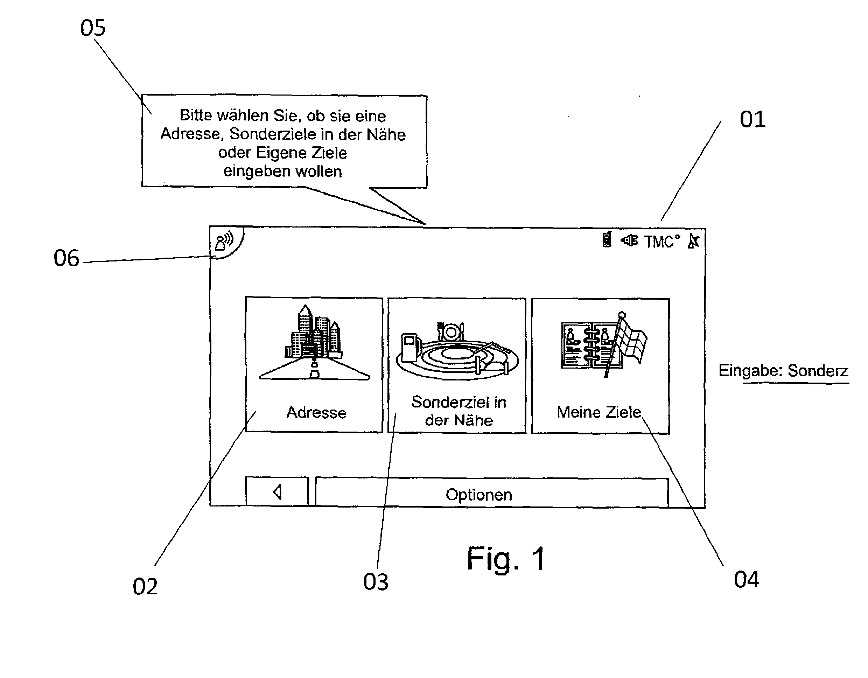

Fig. 1 zeigt eine schematisierte Anzeigeeinrichtung 01 eines Navigationssystems, auf der verschiedene Eingabemöglichkeiten durch die Anzeigeinhalte 02, 03 und 04 dargestellt sind. Der Anzeigeinhalt 02 symbolisiert die Eingabe einer Adresse bestehend aus mehreren Adressbestandteilen. Der Anzeigeinhalt 03 steht für die Suche eines Sonderziels aus einer Sonderzieldatenbank. Der Anzeigeinhalt 04 symbolisiert die Eingabe eines Ziels aus einer vom Bediener angelegten Kontaktdatenbank. Der Ausgabekasten 05 enthält die akustischen Ausgaben des Navigationssystems, mit denen der Benutzer auf die Wahlmöglichkeiten zur Eingabe aufmerksam gemacht wird. Der Anzeigeinhalt 06 signalisiert dem Benutzer, dass eine akustische bzw. sprachgesteuerte Eingabe möglich ist.

Im vorliegenden Beispiel entscheidet sich der Benutzer für die sprachgesteuerte Suche eines Sonderziels. Durch die akustische Eingabe "Sonderziele" wird das erfindungsgemäße Verfahren zum Betrieb eines Navigationssystems initialisiert.

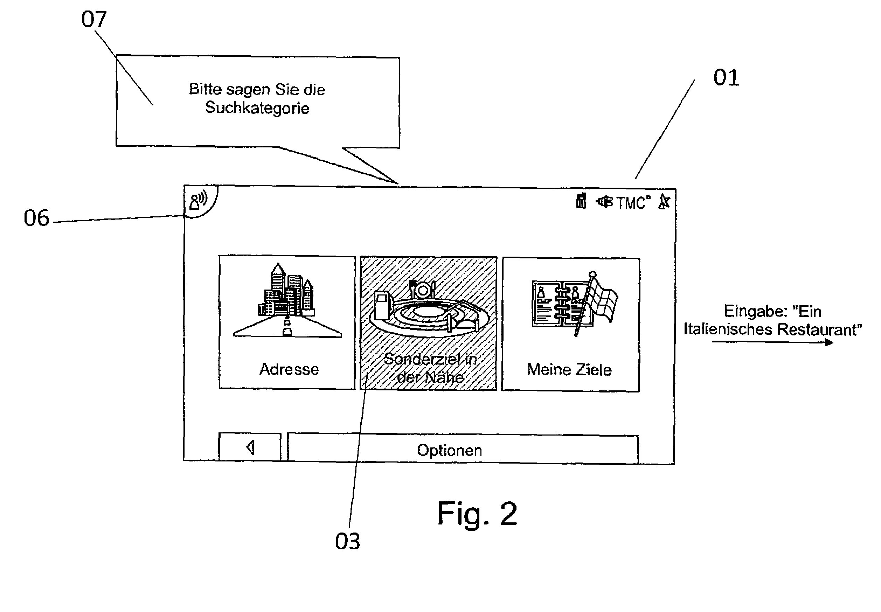

Fig. 2 zeigt die schematisierte Darstellung einer Anzeigeeinrichtung 01, in der das Anzeigeelement 03 graphisch hervorgehoben ist. Dadurch soll dem Benutzer signalisiert werden, dass eine Sonderzielsuche vorgenommen werden kann. Die Möglichkeit, diese Eingabe akustisch vorzunehmen, wird ebenfalls durch das Anzeigeelement 06 symbolisiert. Zudem wird der Benutzer durch eine akustische Ausgabe des Navigationssytems, welche im Ausgabekasten 07 dargestellt ist, darauf hingewiesen, dass die Eingabe einer Suchkategorie bzw. die Eingabe von Sonderzielkategorien vorgesehen ist. Der Benutzer nimmt daraufhin die akustische Eingabe "Ein italienisches Restaurant" vor.

Die getätigte Eingabe wird zunächst vom Spracherkennungsmodul in die zwei Eingabebestandteile "Italienisches" und "Restaurant" unterteilt und anschließend einer Spracherkennungsanalyse unterzogen. Das Ergebnis der Spracherkennungsanalyse wird sodann mit Sprachäquivalenten, insbesondere Phonemen, verglichen, die zur Beschreibung der Sonderzielkategorien in der Sonderzieldatenbank und der Sonderzielkategorie gespeichert sind.

Für den Eingabebestandteil "Italienisches" wird anhand einer Wahrscheinlichkeitsanalyse festgestellt, dass die Sonderzielkategorien "Italienisch", "Indonesisch", "Isuzu" und "Hyundai" als mögliche Äquivalente des Eingabebestandteils bzw. des Ergebnisses der Spracherkennungsanalyse infrage kommen. Der Sonderzielkategorie "Italienisch" wird dabei der höchste Wahrscheinlichkeitswert bzw. die höchste Übereinstimmungswahrscheinlichkeit zugewiesen.

Der Vergleich des Ergebnisses der Spracherkennungsanalyse mit den in der Sonderzieldatenbank gespeicherten Sonderzielkategorien des zweiten Eingabebestandteils "Restaurant" liefert die Sonderzielkategorien "Restaurant", "Renault" und "Repsol" als mögliche Übereinstimmungen mit dem Eingabebestandteil. Für den zweiten Eingabebestandteil liefert die Sonderzielkategorie "Restaurant" die beste Übereinstimmungswahrscheinlichkeit mit der Eingabe.

Ob im erfindungsgemäßen Verfahren vorgesehen ist, dass jeweils nur die Sonderzielkategorien, die die beste Übereinstimmung mit den Eingabebestandteilen aufweisen, auf einen differenzierenden Zusammenhang der Sonderzielkategorien im Sonderzielbaum der Sonderzieldatenbank geprüft werden, oder ob alle möglichen Entsprechungen der jeweiligen Eingabebestandteile auf einen differenzierenden Zusammenhang überprüft werden, ist grundsätzlich beliebig. Im vorliegenden Beispiel soll angenommen werden, dass alle jeweils möglichen Sonderzielkategorien eines Eingabebestandteils zur Überprüfung herangezogen werden. Dabei wird festgestellt, dass lediglich die Sonderzielkategoriepaarungen "Italienisch - Restaurant" und "Indonesisch - Restaurant" über einen differenzierenden Zusammenhang der Sonderzielkategorien im Sonderzielkategoriebaum der Sonderzielkategoriedatenbank verknüpft sind. Hier soll nun angenommen werden, dass aufgrund des Ergebnisses der Wahrscheinlichkeitsanalyse die Sonderzielkategoriepaarung mit dem insgesamt höheren Wahrscheinlichkeitswert ausgewählt wird.

Es ist offensichtlich, dass in der Sonderzielkategoriepaarung "Italienisch - Restaurant" die Sonderzielkategorie "Italienisch" zur Differenzierung der Sonderzielkategorie "Restaurant" dient. Demnach sieht das erfindungsgemäße Verfahren vor, dass, insbesondere unabhängig von der Eingabereihenfolge der Eingabebestandteile, Sonderzielkategorien zur Weiterverarbeitung ausgewählt werden, die den höchsten Grad der

Differenzierung der Sonderzielkategorien darstellen. In diesem Fall handelt es sich dabei um Sonderziele aus der Sonderzielkategorie "Italienisch" als Differenzierung der Sonderzielkategorie "Restaurant". Dementsprechend sieht das erfindungsgemäße Verfahren vor, dass Sonderziele, die durch die Sonderzielkategorie "Italienisch" beschrieben werden, zur Weiterverarbeitung ausgewählt werden.

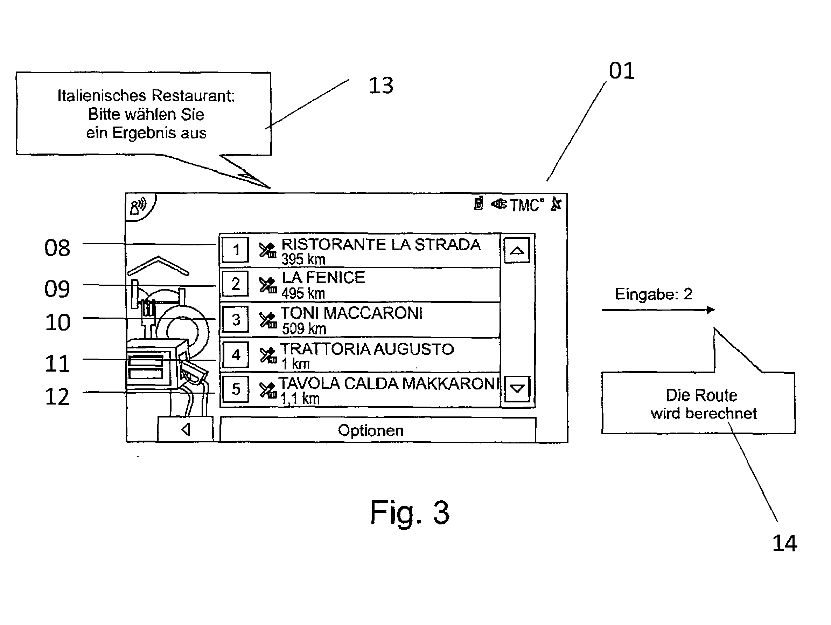

In einer Ausführungsvariante des erfindungsgemäßen Verfahrens besteht die Weiterverarbeitung der ausgewählten Sonderziele darin, dass in einer Umkreissuche überprüft wird, ob sich Sonderziele in einem bestimmten Umkreis um die aktuelle Position des Navigationssystems befinden. In Fig. 3 ist das Ergebnis einer derartigen Weiterverarbeitung zur Darstellung für den Benutzer als Anzeige der Anzeigeeinrichtung 01 dargestellt. Die Anzeigeinhalte 08 bis 12 beinhalten Sonderziele, die der Sonderzielkategorie entstammen, aus der Sonderziele zur Weiterverarbeitung ausgewählt wurden. Hier sind für das vorliegende Beispiel italienische Restaurants als Ergebnis einer Weiterverarbeitung in Form einer Umkreissuche auf der Anzeigeeinrichtung 01 dargestellt. Zudem enthalten die jeweiligen Anzeigeinhalte Entfernungsangaben zum jeweiligen Sonderziel. Die akustische Ausgabe des Navigationssystems, welche im Ausgabekasten 13 dargestellt ist, informiert den Benutzer über die Sonderzielkategorie, aus der Sonderziele zur Weiterverarbeitung ausgewählt wurden. Weiter wird der Benutzer durch die akustischen Ausgaben des Navigationssystems aufgefordert, eines der Sonderziele der Anzeigeinhalte 08 bis 12 auszuwählen.

In welcher Art und Weise eine derartige Auswahl erfolgt, ist grundsätzlich beliebig. Da der Anzeigeinhalt 06 der Anzeigeeinrichtung 01 dem Benutzer weiterhin symbolisiert, dass eine akustische Eingabe möglich ist, entscheidet sich dieser für die akustische Eingabe "2". Damit wird das Sonderziel der Anzeigeeinheit 09 ausgewählt und zum Zielpunkt für einen Routenberechnungsprozess vom aktuellen Standpunkt des Navigationssystems zum ausgewählten Sonderziel übernommen. Im Ausgabekasten 14 sind die akustischen Ausgaben des Navigationssystems dargestellt, welche dem Benutzer die Auswahl des Sonderziels und die Initialisierung der Routenberechnung zum ausgewählten Sonderziel übermitteln. Wenn nur ein Sonderziel aus der ermittelten Kategorie im Umkreis oder in dem definierten Gebiet zu finden ist, kann die Auswahl der Sonderziele übersprungen werden und direkt, vorzugsweise nach insbesondere akustischer Information an den Benutzer über das identifizierte Sonderziel, die Weiterverarbeitung, insbesondere die Routenplanung, zu diesem Sonderziel begonnen werden.

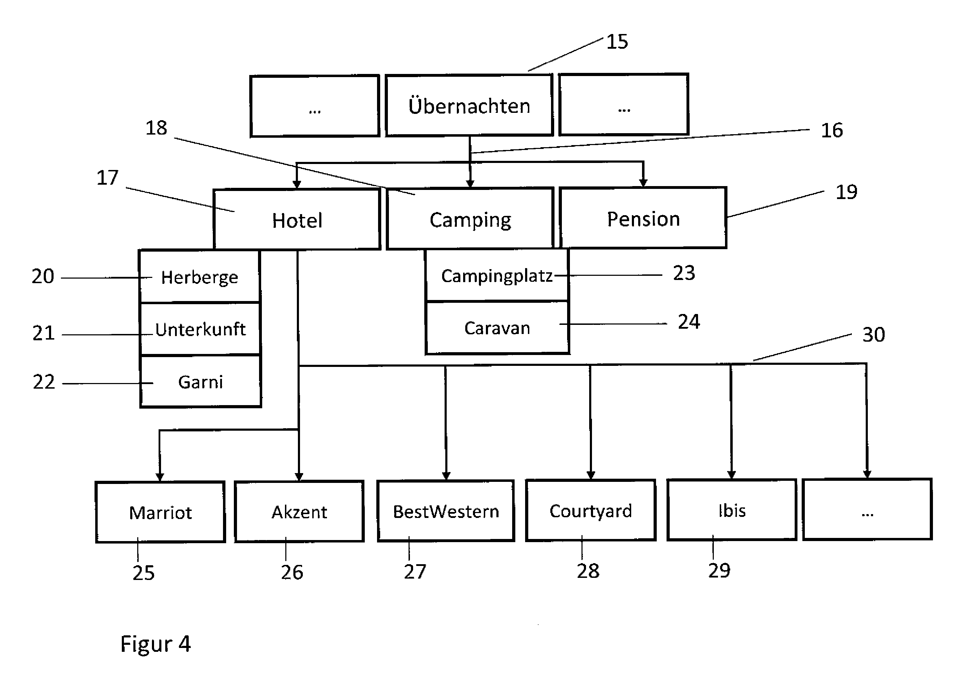

Fig. 4 zeigt die schematisierte Darstellung eines Ausschnitts eines Sonderzielkategoriebaums. Darin sind die Sonderzielkategorien der Sonderzielkategoriedatenbank durch differenzierende Verknüpfungen miteinander verbunden. Am Beispiel der Sonderzielkategorie "Übernachtung" 15 sollen die Vorzüge des erfindungsgemäßen Verfahrens veranschaulicht werden. Die Verknüpfungsstruktur 16 veranschaulicht für die Sonderzielkategorie "Übernachtung" 15 die Verknüpfung mit den Sonderzielkategorien "Hotel" 17, "Camping" 18 und "Pension" 19. Wie aus den Begriffsinhalten der Sonderzielkategorien 17 bis 19 hervorgeht, eignen sich diese eindeutig zur Differenzierung der Sonderzielkategorie "Übernachtung" 15, was durch die Verknüpfungsstruktur 16 deutlich gemacht wird. In welcher Form die Verknüpfungsstruktur 16 gespeichert wird, ist dabei beliebig. Es kann sowohl eine interne als auch externe Speicherung bezüglich der Sonderzielkategoriedatenbank erfolgen. Bei den Sonderzielkategorien "Herberge" 20, "Unterkunft" 21 und "Garni" 22 handelt es sich inhaltlich um Synonyme zur Sonderzielkategorie "Hotel" 17. Die Synonyme der Sonderzielkategorien können alternativ zu dem Begriff "Hotel" der Sonderzielkategorie 17 zum Vergleich des Ergebnisses einer Spracherkennungsanalyse herangezogen werden. Da die Sonderzielkategorien "Herberge" 20, "Unterkunft" 21 und "Garni" 22 die Sonderzielkategorie "Hotel" 17 nicht differenzieren, ist auch keine Differenzierungsstruktur im Sonderzielkategoriebaum vorgesehen. Gleiches gilt für die Sonderzielkategorien "Campingplatz" 23 und "Caravan" 24 bezüglich der Sonderzielkategorie "Camping" 18. Das erfindungsgemäße Verfahren sieht ebenfalls vor, dass Firmen- bzw. Markennamen als Sonderzielkategorien im Sonderzielkategoriebaum bzw. in der Sonderzielkategoriedatenbank enthalten sind, wobei diese Firmen bzw. Markennamen zur Differenzierung einer übergeordneten Sonderzielkategorie dienen. Im Fall der Sonderzielkategorie "Hotel" 17 wird dies durch die Sonderzielkategorien "Marriot" 25, "Akzent" 26, "BestWestern" 27, "Courtyard" 28 und "Ibis" 29 verdeutlicht, die die Firmen- bzw. Markennamen bekannter Hotelketten enthalten und durch die Verknüpfungsstruktur 30 mit der Sonderzielkategorie "Hotel" 17 verbunden sind.

Dementsprechend wird bei der Eingabe "Marriot, Hotel", für die der Einfachheit halber angenommen werden soll, dass sie genau erkannt wurde, mittels der Verknüpfungsstruktur 30 ein differenzierender Zusammenhang der Sonderzielkategorien "Marriot" 25 und "Hotel" 17 festgestellt, wodurch nur Sonderziele der Kategorie "Marriot" 25 zur Weiterverarbeitung ausgewählt werden. Eingaben wie "Übernachtung, Mariott" oder "Mariott, Unterkunft" führen, eine korrekte Erkennung ebenfalls vorausgesetzt, zur Auswahl der gleichen Sonderziele, da im ersten Fall auch ein indirekter, differenzierender Zusammenhang durch das erfindungsgemäße Verfahren berücksichtigt wird und im zweiten Fall das Synonym "Unterkunft" 21 ebenfalls differenzierend mit der Sonderzielkategorie "Marriot" 25 verknüpft ist.

Andererseits führt eine Eingabe, die als "Hotel, Pension" erkannt wird, dazu, dass sowohl Sonderziele aus der Sonderzielkategorie "Hotel" 17 als auch aus der Sonderzielkategorie "Pension" 19 zur Weiterverarbeitung ausgewählt werden. Dies ist dem Umstand geschuldet, dass die beiden erkannten Sonderzielkategorien keinen differenzierenden Zusammenhang aufweisen.

## Patentansprüche

1. Verfahren zum Betrieb eines Navigationssystems mit einer Routenberechnungseinheit, mit einer Sonderzieldatenbank, in der Sonderziele zumindest mit Daten zur Beschreibung ihrer geographischen Lage und mit zumindest einer Sonderzielkategorie zur Klassifizierung des Sonderziels gespeichert sind, mit einer Sonderzielkategoriedatenbank, in der Sonderzielkategorien in einem Sonderzielkategoriebaum abgespeichert sind, wobei mittels der Verzweigungen des Sonderzielkategoriebaums eine Differenzierung der Sonderzielkategorien (15, 17, 18, 19, 25, 26, 27, 28, 29) erfolgt, und mit einer Aufnahmeeinrichtung, an der eine akustische Eingabe, die aus zumindest einem Eingabebestandteil besteht, aufgenommen werden kann, wobei der mindestens eine Eingabebestandteil mit einem Spracherkennungsmodul analysiert wird, und wobei in Abhängigkeit vom Ergebnis der Spracherkennungsanalyse einem Eingabebestandteil zumindest eine Sonderzielkategorie (15, 17, 18, 19, 25, 26, 27, 28, 29) aus der Sonderzielkategoriedatenbank zugeordnet werden kann,
**dadurch gekennzeichnet,**
**dass** bei einer Sonderzieleingabe aus zwei oder mehr Eingabebestandteilen geprüft wird, ob die zugeordneten Sonderzielkategorien (15, 17, 18, 19, 25, 26, 27, 28, 29) von zumindest zwei Eingabebestandteilen über den Sonderzielkategoriebaum der Sonderzielkategoriedatenbank durch einen differenzierenden Zusammenhang der Sonderzielkategorien (15, 17, 18, 19, 25, 26, 27, 28, 29) miteinander verknüpft sind, wobei aus zumindest einer einem Eingabebestandteil zugeordneten Sonderzielkategorie (15, 17, 18, 19, 25, 26, 27, 28, 29) zumindest ein Sonderziel, welches durch zumindest die entsprechende Sonderzielkategorie klassifiziert ist, zur Weiterverarbeitung ausgewählt wird.

2. Verfahren nach Anspruch 1,
**dadurch gekennzeichnet,**
**dass** bei unterschiedlichen Eingabebestandteilen zugeordneten Sonderzielkategorien (15, 17, 18, 19, 25, 26, 27, 28, 29), die durch einen differenzierenden Zusammenhang verknüpft sind, zumindest ein Sonderziel aus der Sonderzielkategorie (15, 17, 18, 19, 25, 26, 27, 28, 29) zur Weiterverarbeitung ausgewählt wird, die den höchsten Grad der Differenzierung aufweist.

3. Verfahren nach Anspruch 1,
**dadurch gekennzeichnet,**
**dass** bei unterschiedlichen Eingabebestandteilen zugeordneten Sonderzielkategorien (15, 17, 18, 19, 25, 26, 27, 28, 29), die nicht durch einen differenzierenden Zusammenhang verknüpft sind, zumindest ein Sonderziel aus jeder, einem Eingabebestandteil zugeordneten Sonderzielkategorie (15, 17, 18, 19, 25, 26, 27, 28, 29) zur Weiterverarbeitung ausgewählt wird.

4. Verfahren nach einem der Ansprüche 1 bis 3,
**dadurch gekennzeichnet,**
**dass** die Zuordnung eines Ergebnisses einer Spracherkennungsanalyse zu einer Sonderzielkategorie (15, 17, 18, 19, 25, 26, 27, 28, 29) anhand von Sprachäquivalenten erfolgt, wobei für die Sonderzielkategorien (15, 17, 18, 19, 25, 26, 27, 28, 29) Sprachäquivalente, insbesondere Phoneme, in der Sonderzielkategoriedatenbank gespeichert sind.

5. Verfahren nach einem der Ansprüche 1 bis 4,
**dadurch gekennzeichnet,**
**dass** die Zuordnung eines Ergebnisses einer Spracherkennungsanalyse zu einer Sonderzielkategorie (17, 18) Synonyme (20, 21, 22, 23, 24) zu den Sonderzielkategorien (17, 18) berücksichtigt, wobei die Synonyme (20, 21, 22, 23, 24) der zumindest einen Sonderzielkategorie (17, 18) in der Sonderzielkategoriedatenbank gespeichert sind.

6. Verfahren nach einem der Ansprüche 1 bis 5,
**dadurch gekennzeichnet,**
**dass** die Zuordnung eines Ergebnisses einer Spracherkennungsanalyse zu einer Sonderzielkategorie (15, 17, 18, 19, 25, 26, 27, 28, 29) Sprachäquivalente berücksichtigt, die eine unterschiedliche Aussprache einer Sonderzielkategorie (15, 17, 18, 19, 25, 26, 27, 28, 29) darstellen und für eine Sonderzielkategorie (15, 17, 18, 19, 25, 26, 27, 28, 29) in der Sonderzielkategoriedatenbank gespeichert sind.

7. Verfahren nach einem der Ansprüche 1 bis 6,
**dadurch gekennzeichnet,**
**dass** für Sonderzielkategorien (15, 17, 18, 19, 25, 26, 27, 28, 29) Sprachäquivalente in unterschiedlichen Sprachen in der Sonderzielkategoriedatenbank gespeichert sind, die bei der Zuordnung eines Ergebnisses einer Spracherkennungsanalyse zu einer Sonderzielkategorie (15, 17, 18, 19, 25, 26, 27, 28, 29) berücksichtigt werden.

8. Verfahren nach einem der Ansprüche 1 bis 7,
**dadurch gekennzeichnet,**
**dass** die Zuordnung von Sonderzielkategorien (15, 17, 18, 19, 25, 26, 27, 28, 29) zu Eingabebestandteilen als Ergebnis der Spracherkennungsanalyse unabhängig von der Eingabereihenfolge der Eingabebestandteile erfolgt.

9. Verfahren nach einem der Ansprüche 1 bis 8,
**dadurch gekennzeichnet,**
**dass** die Zuordnung von Sonderzielkategorien (15, 17, 18, 19, 25, 26, 27, 28, 29) zu Eingabebestandteilen als Ergebnis der Spracherkennungsanalyse anhand einer Wahrscheinlichkeitsanalyse durchgeführt wird.

10. Verfahren nach Anspruch 9,
**dadurch gekennzeichnet,**
**dass** keine Zuordnung eines Ergebnisses einer Spracherkennungsanalyse zu einer Sonderzielkategorie (15, 17, 18, 19, 25, 26, 27, 28, 29) erfolgt, wenn das Ergebnis der Wahrscheinlichkeitsanalyse einen bestimmten Wert unterschreitet, wobei der Benutzer insbesondere durch eine Ausgabe darauf aufmerksam gemacht wird, dass keine ausreichende Übereinstimmung der Eingabe bzw. des Eingabebestandteils mit den Sonderzielkategorien (15, 17, 18, 19, 25, 26, 27, 28, 29) ermittelt werden konnte.

11. Verfahren nach einem der Ansprüche 1 bis 10,
**dadurch gekennzeichnet,**
**dass** zur Differenzierung von Sonderzielkategorien (17) Marken-und/oder Firmennamen (25, 26, 27, 28, 29) in der Sonderzielkategoriedatenbank gespeichert sind und bei der Zuordnung eines Ergebnisses einer Spracherkennungsanalyse zu einer Sonderzielkategorie (17) berücksichtigt werden.

12. Verfahren nach einem der Ansprüche 1 bis 11,
**dadurch gekennzeichnet,**
**dass** die Auswahl der Sonderziele einer einem Eingabebestandteil zugeordneten Sonderzielkategorie zur Weiterverarbeitung darin besteht, dass mittels einer Umkreissuche Sonderziele der einem Eingabebestandteil zugeordneten Sonderzielkategorie ausgefiltert werden, die sich in einem Umkreis bestimmter Größe um die Position des Navigationssystems befinden.

13. Verfahren nach einem der Ansprüche 1 bis 11,
**dadurch gekennzeichnet,**
**dass** die Auswahl der Sonderziele einer einem Eingabebestandteil zugeordneten Sonderzielkategorie zur Weiterverarbeitung darin besteht, dass Sonderziele der einem Eingabebestandteil zugeordneten Sonderzielkategorie ausgefiltert werden, die sich in einem definierten geographischen Gebiet bestimmter Größe, insbesondere in einer Stadt oder einer Region, befinden.

14. Verfahren nach einem der Ansprüche 1 bis 13,
**dadurch gekennzeichnet,**
**dass** die Daten, die die differenzierenden Zusammenhänge des Sonderzielbaums beschreiben, in der Sonderzielkategoriedatenbank gespeichert sind.

15. Verfahren nach einem der Ansprüche 1 bis 13,
**dadurch gekennzeichnet,**
**dass** die Daten, die die differenzierenden Zusammenhänge des Sonderzielbaums beschreiben, extern von der Sonderzielkategoriedatenbank in einer Datenstruktur gespeichert sind.
